# EUROPÄISCHE PATENTANMELDUNG

(11) **EP 1 236 629 A2**
(43) Veröffentlichungstag der Anmeldung: **04.09.2002**
(21) Anmeldenummer: 02000751.4
(22) Anmeldetag: 12.01.2002
(51) Int. Cl.: B60R 25/02

(54) **Kraftfahrzeug mit einer Lenkradverriegelung**

(30) Priorität: 01.03.2001 DE 10109989
(71) Anmelder: Conti Temic Microelectronic GmbH, 90411 Nürnberg (DE)
(72) Erfinder: Fendt, Günter, 86529 Schrobenhausen (DE)
(74) Vertreter: Kolb, Georg

(57) **Zusammenfassung**

Es wird ein Kraftfahrzeug mit einer Lenkradverriegelung und einer Verstellvorrichtung vorgestellt, welche eine Verstellbewegung des Lenkrads bis zum Einrasten der Lenkradverriegelung durchführt. Die Verstellvorrichtung wird auf einen Verriegelungsbefehl hin aktiviert, der erzeugt wird, wenn der Fahrer das Fahrzeug verlassen will, was anhand unterschiedlicher Signale (Zündschlüsselentnahme, Türöffnen, Fahrzeugverschließen usw.) erkannt werden kann.

## Beschreibung

Die Erfindung betrifft ein Kraftfahrzeug mit einer Lenkradverriegelung gemäß dem Oberbegriff des Anspruchs 1, wie diese beispielsweise der DE 199 15 747 A1 zu entnehmen ist. Wie dort auf Spalte 1, Zeilen 20-27 zu entnehmen ist, muss am Lenkrad zum Verriegeln nach dem Abziehen des Zündschlüssels aus dem Zündschloss noch eine geringfügige Lenkradbewegung vorgenommen werden, wozu ein erhöhter Kraftaufwand erforderlich ist. Deshalb wird die Lenkradverriegelung häufig bewusst oder versehentlich nicht aktiviert.

Deshalb wird bereits aus der DE 199 24 835 A1 eine Vorrichtung zur automatischen Ver- und Entriegelung der Lenkspindel eines Kraftfahrzeuges vorgestellt. Dabei wird die Lenkspindel in jeder beliebigen aktuellen Position verriegelt. Der Aufwand dafür ist jedoch erheblich und setzt konstruktive Veränderungen und in erheblichem Umfang zusätzliche Baugruppen voraus. Weitere Lenkradverriegelungsmechanismen sind der DE 199 16 966 A1 oder DE 198 09 295 C1 zu entnehmen.

Es soll nachfolgend ein alternatives Konzept zur Sicherstellung der Lenkradverriegelung vorgestellt werden, welches mit einfacheren Mitteln realisierbar ist.

So ist eine auf einen Verriegelungsbefehl hin aktivierbare Verstellvorrichtung vorgesehen, welche eine Verstellbewegung des Lenkrads bis zum Einrasten der Lenkradverriegelung durchführt. Die Verstellvorrichtung kann dabei beispielsweise direkt an die Lenkstange angreifen. Der Verriegelungsbefehl wird entweder durch einen direkten Befehl des Fahrers, beispielsweise durch Bedienung einer entsprechenden Taste, oder bei Erkennen bestimmter Handlungen des Fahrers erzeugt, beispielsweise wenn er die Zündung abschaltet, die Fahrertür öffnet oder das Fahrzeug von außen manuell oder per Funkfernbedienung verschließt oder in sonstiger Weise für Sensoren erfaßbar das Fahrzeug deaktivieren will, bspw. sich mit seinem zur Fahreridentifikation und automatischen Ver- und Entriegelung der Fahrzeugtüren verwendeten Signalgeber vom Kraftfahrzeug entfernt. Derartige Fahreridentifikationssysteme sind an sich bereits bekannt, beispielsweise aus der DE 198 39 355, DE 198 46 803 oder DE 199 41 428 A1.

Zudem wird ein Warnsignal erzeugt, wenn die Verstellvorrichtung defekt ist oder das Lenkrad aus einem anderen Grunde nicht einrastet

Zudem bleibt vorzugsweise eine Lenkkraftverstärkung weiter in Betrieb, bis das Lenkrad verriegelt ist. Die Verstellvorrichtung kann dabei die Wirkung der Lenkkraftverstärkung ausnutzen oder sogar baulich in diese integriert werden.

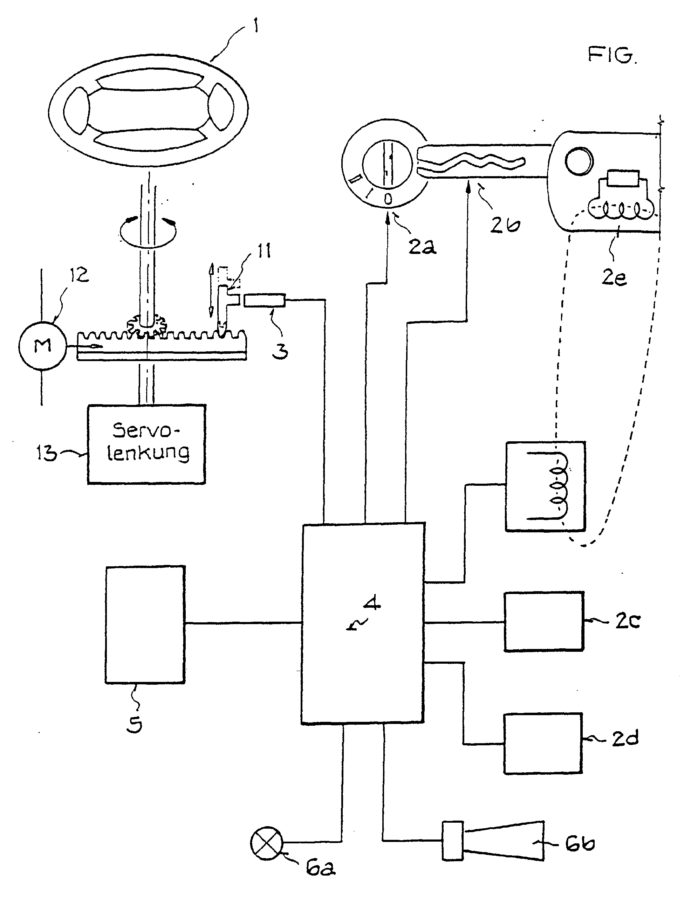

Die Erfindung wird nachfolgend anhand eines Ausführungsbeispiels und der Figur näher erläutert. Kurze Beschreibung der Figur:
- Figur: Kraftfahrzeug mit einer Überwachungseinrichtung für die Lenkradverriegelung

Die (einzige) Figur zeigt ein Kraftfahrzeug mit einer Überwachungseinrichtung 4 für die Lenkradverriegelung 11 des Lenkrades 1. Die Überwachungsvorrichtung 4 weist dazu einen Sensor 3 zur Erfassung des Verriegelungszustands, bspw. einen Positionssensor für das Verriegelungselement auf. Entsprechend der Signale des Sensors 3 erzeugt die Überwachungsvorrichtung 4 ein den Verriegelungszustand des Lenkrads 1 anzeigendes Signal. Zudem ist eine auf einen Verriegelungsbefehl hin aktivierbare Verstellvorrichtung 12 vorgesehen, die den erforderlichen Verstellweg des Lenkrades 1 bis zum Einrasten der Lenkradverriegelung 11 aufbringt. Der Verstellweg ist in der Regel äußerst gering und durch Drehung in eine beliebige Richtung möglich. Anderenfalls könnten zusätzlich Sensoren zur Detektion der IstPosition des Lenkrads und zur Erzeugung eines die Richtung und ggfs. das Maß der erforderlichen Verstellbewegung anzeigenden Signals vorgesehen werden.

Insbesondere wird von der Überwachungseinrichtung 4 ein Verriegelungsbefehl erzeugt, wenn der Sensor 3 anzeigt, daß das Verriegelungselement 11 in der entriegelten Position, das Lenkrad 1 also nicht verriegelt ist und zumindest eine der nachfolgenden weiteren alternativen Bedingungen eintritt. Ziel dieser Bedingungen ist es, eine Ausserbetriebnahmeabsicht des Fahrers zu erkennen und ihn zur Verriegelung des Lenkrads zu animieren, wenn dies noch nicht erfolgt ist bzw. von der aktiverbaren Verstellvorrichtung nicht selbsttätig ausgeführt werden kann.

So wird entweder die Zündung, also die Stellung des Zündschlosses 2a erfaßt und bei entsprechender Deaktivierung der Zündung ohne Verriegelung des Fahrzeugs das Warnsignal erzeugt.

Alternativ dazu kann bzw. wird der Fahrer gewarnt, wenn die Lenkradverriegelung nicht eingerastet hat und bzw. nachdem er den Zündschlüssel 2b des Kraftfahrzeuges abgezogen hat.

Des weiteren kann mittels eines Türsensors 2c die Fahrertür des Kraftfahrzeuges überwacht werden und der Fahrer beim Öffnen der Tür darauf hingewiesen werden, dass das Lenkrad 1 noch nicht verriegelt ist. Diese bisher vorgestellten Varianten haben den Vorteil, dass der Fahrer sich noch im Fahrzeug befindet und somit schnell ans Lenkrad greifen und die Verriegelung einrasten lassen kann.

Besonders einfach läßt sich gerade bei Fahrzeugen mit einer Zentralverriegelung auch realisieren, daß das Lenkrad in die Verriegelungsposition verstellt wird, wenn das Kraftfahrzeug von außen verschlossen wird, ohne dass das Lenkrad 1 verriegelt ist. Dazu muß einzig eine entsprechende Datenverbindung zwischen der Überwachungsvorrichtung 4 für die Lenkradverriegelung mit dem Türschloß oder dem Steuergerät 2d Zentralverriegelung geschaffen werden.

Alternativ ist auch ein Datenaustausch mit einem Fahreridentifikationssystem denkbar, so dass eine Verstellung erfolgt, wenn ein zur Fahreridentifikation und automatischen Ver- und Entriegelung der Fahrzeugtüren verwendeter Signalgeber 2e einen vorgegebenen Nahbereich um das Kraftfahrzeug verläßt.

Um grundsätzlich bei all diesen Varianten die Verrieglung nicht zu häufig zu betätigen, erscheint es vorteilhaft, dass die Überwachungsvorrichtung 4 bei nicht verriegeltem Lenkrad 1 erst dann einen Verriegelungsbefehl erzeugt, wenn der Zustand eine vorgegebene Zeitdauer vorliegt. Die Zeitsteuerung wird dabei von der Überwachungseinrichtung 4 durchgeführt.

Eine besondere Ausgestaltung der vorgestellten Lenkradverriegelung besteht darin, dass nicht wie üblich beim Abschalten der Zündung des Fahrzeugs auch die heute übliche Lenkkraftverstärkung 13 deaktiviert wird, sondern diese weiter in Betrieb bleibt, sofern das Lenkrad 1 noch nicht verriegelt ist. Dazu wird einzig die Lenkkraftverstärkung 13 nicht über das Zündschloss 2a mit der Energieversorgung getrennt, sondern weist eine eigenständige und von der Überwachungseinrichtung 4 aus steuerbare Energieversorgung auf. Dadurch kann das Lenkrad 1 ohne großen Kraftaufwand auch beim Stillstand des Motors noch in die Einrastposition der Lenkradverriegelung gedreht werden, was bisher einer der Hauptgründe für die nicht gesicherten Fahrzeuge war.

Um die Energiereserven andererseits zu schonen, wird die Lenkkraftverstärkung nur maximal für eine vorgegebene Zeitdauer nach Abschalten der Zündung weiter in Betrieb gehalten, vorzugsweise sofort mit dem Verriegeln des Lenkrades oder alternativ mit dem Verschließen 2d des Fahrzeuges von der Überwachungseinrichtung 4 beendet.

Wenn die Verstellvorrichtung 12 defekt ist oder das Lenkrad aus einem anderen Grunde nicht einrastet, wird von der Überwachungsvorrichtung 4 ein Warnsignal vorzugsweise an eines der vorhandenen Signalisierungssysteme im Fahrzeug gesendet, beispielsweise ein akustisches Warnsignal erzeugt, indem vorzugsweise die Hupe (6b) oder ein Sprachdialogsystem des Kraftfahrzeugs aktiviert wird, oder auf das elektrische Warnsignal der Überwachungsvorrichtung 4 hin ein optisches Signal 6a erzeugt, insbesondere die Blinklichter und/oder Scheinwerfer und/oder Rücklichter und/oder Bremslichter aktiviert werden. Dabei wird eine von anderen Signalen im Fahrzeug, insbesondere dem Verriegelungssignal beim Verschließen, unterscheidbare Signalform gewählt.

Die aktivierbare Verstellvorrichtung 12, in der Fig. als Elektromotor mit Zahnradkopplung an der Lenkstange dargestellt ist, kann auch auf einer hydraulischen oder pneumatischen Funktion basieren. So könnte ein Abstellvorgang der Lenkkraftverstärkungseinrichtung richtungsbezogen ungleichmäßig bzw. unsymmetrisch erfolgen und so über den Druckunterschied eine Verstellbewegung erzeugt werden, der ja in der Regel nur über einen geringen Winkel bis zur nächsten Verriegelungsposition erforderlich ist. Die unsymmetrische Druckabsenkung könnte mittels einer entsprechenden Ventilsteuerung erfolgen, ggfs. sogar richtungsselektiv.

## Patentansprüche

1. Kraftfahrzeug mit einer Lenkradverriegelung, die in bestimmten Positionen des Lenkrades einrastbar ist, und einer Überwachungsvorrichtung (4), die ein den Verriegelungszustand des Lenkrads (1) anzeigendes Signal erzeugt, **dadurch gekennzeichnet, dass** eine auf einen Verriegelungsbefehl hin aktivierbare Verstellvorrichtung (12) vorgesehen ist, welche eine Verstellbewegung des Lenkrads bis zum Einrasten der Lenkradverriegelung (11) durchführt.

2. Kraftfahrzeug nach Anspruch 1, **dadurch gekennzeichnet, daß** der Verriegelungsbefehl erzeugt wird, wenn
a) die Zündung (2a) des Kraftfahrzeuges abgeschaltet wird oder
b) der Zündschlüssel (2b) des Kraftfahrzeuges abgezogen wird oder
c) die Fahrertür (2c) des Kraftfahrzeuges geöffnet wird oder
d) das Kraftfahrzeug von außen (2d) verschlossen wird oder
e) ein zur Fahreridentifikation und automatischen Ver- und Entriegelung der Fahrzeugtüren verwendeter Signalgeber (2e) einen vorgegebenen Nahbereich um das Kraftfahrzeug verläßt.

3. Kraftfahrzeug nach Anspruch 2, **dadurch gekennzeichnet, dass** die Überwachungsvorrichtung (4) bei nicht verriegeltem Lenkrad (1) erst dann einen Verriegelungsbefehl erzeugt, wenn der Zustand gemäß der Merkmale a) bis e) für eine vorgegebene Zeitdauer anhält.

4. Kraftfahrzeug einem der vorangehenden Ansprüche nach Anspruch ein Lenkkraftverstärker (13) vorgesehen ist, der solange zündungsunabhängig so lange in Betrieb bleibt, bis das Lenkrad (1) verriegelt ist.

5. Kraftfahrzeug nach einem der vorangehenden Ansprüche, **dadurch gekennzeichnet, daß** ein Warnsignal erzeugt wird, wenn die Verstellvorrichtung (12) defekt ist oder das Lenkrad aus einem anderen Grunde nicht einrastet.
